# EUROPÄISCHE PATENTSCHRIFT

(11) **EP 1 516 792 B1**
(45) Veröffentlichungstag und Bekanntmachung des Hinweises auf die Patenterteilung: **13.09.2006**
(21) Anmeldenummer: 04019135.5
(22) Anmeldetag: 12.08.2004
(51) Int. Cl.: B60T 8/00

(54) **Verfahren und Vorrichtung zur Berücksichtigung der Fahrer-Lenkreaktion bei der Gespannstabilisierung**
Method and Apparatus that takes in consideration the driver steering reaction for a tractor-trailer combination
Methode et dispositif pour prendre en considération la réaction au volant du conducteur pour la stabilisation d'un ensemble tracteur-remorque

(30) Priorität: 18.09.2003 DE 10343186; 02.02.2004 DE 102004005074
(43) Veröffentlichungstag der Anmeldung: 23.03.2005
(73) Patentinhaber: ROBERT BOSCH GMBH, 70442 Stuttgart (DE)
(72) Erfinder: Nenninger, Gero, 71706 Markgroeningen (DE)

(56) Entgegenhaltungen:
- WO-A-02/053424
- DE-A- 10 031 266
- DE-A- 10 048 418
- DE-A- 19 964 048

## Beschreibung

### Stand der Technik

Die Erfindung geht aus von einem Verfahren und einer Einrichtung zur Stabilisierung eines Straßenfahrzeugs gemäß der DE 199 64 048 A1.

In der DE 199 64 048 A1 wird ein Straßenfahrzeug, insbesondere ein Personenwagen mit einem durch den Personenwagen gezogenen Anhänger, in Bezug auf Schlingerbewegungen überwacht. Beim Erkennen einer Schlingerbewegung wird dem Fahrzeug automatisch ein Giermoment eingeprägt, welches zu der Schlingerbewegung im wesentlichen gegenphasig ist.

Aus der DE 100 31 266 A1 sind ein Verfahren und eine Vorrichtung zur Erkennung einer Pendelbewegung eines Fahrzeugs bekannt. Dazu enthält die Vorrichtung wenigstens ein erstes Ermittlungsmittel, mit dem eine die Querdynamik des Fahrzeugs repräsentierende Querdynamikgröße ermittelt wird. Weiter enthält sie zweite Ermittlungsmittel, mit denen eine die Fahrzeuggeschwindigkeit beschreibende Geschwindigkeitsgröße ermittelt wird. Mit Hilfe von dritten Ermittlungsmitteln wird in Abhängigkeit der Querdynamikgröße und der Geschwindigkeitsgröße ermittelt, ob eine Pendelbewegung des Fahrzeugs vorliegt. Eine Pendelbewegung liegt dann vor, wenn die Geschwindigkeitsgröße größer als ein zugehöriger Schwellenwert ist und wenn die Querdynamikgröße größer als ein zugehöriger Schwellenwert ist.

Die Merkmale der Oberbegriffe der unabhängigen Ansprüche sind der DE 199 64 048 A1 entnommen.

### Vorteile der Erfindung

Die Erfindung betrifft eine Vorrichtung zur Dämpfung der Schlingerbewegungen eines von einem Straßenfahrzeug gezogenen Anhängers,
- welche Schlingerbewegungsdetektionsmittel, mit denen eine Schlingerbewegung des Anhängers sowie deren Intensität anhand einer Größe, in welche wenigstens eine die Fahrzeugquerdynamik beschreibende Größe eingeht, erkannt wird und
- Schlingerdämpfungsmittel, mit denen bei Überschreiten eines Intensitätsgrenzwertes durch die Intensität der Schlingerbewegung die Dämpfung der Schlingerbewegung anhand fahrerunabhängiger Bremseingriffe am Straßenfahrzeug und/oder einer fahrerunabhängigen Rücknahme des Motormoments erfolgt,
enthält. Der Kern der Erfindung ist dadurch gekennzeichnet, dass weiterhin
- Lenkwinkelanalysemittel vorhanden sind, mit denen aus dem zeitlichen Verlauf des Lenkwinkels wenigstens eine Kenngröße ermittelt wird und
- der Intensitätsgrenzwert, bei dessen Überschreiten durch die Intensität der Schlingerbewegung die Dämpfung der Schlingerbewegung erfolgt, abhängig von der ermittelten Kenngröße ist.
Da der Lenkwinkelverlauf den Fahrerwunsch repräsentiert, ist es damit möglich, die Schlingerdämpfung an das vorangegangene Fahrerverhalten anzupassen. Bei der Größe, in welche wenigstens eine die Fahrzeugquerdynamik beschreibende Größe eingeht, kann es sich insbesondere um eine kombinierte Größe handeln, in welche sowohl eine die Fahrzeugquerdynamik beschreibende Größe als auch eine Fahrerwunschgröße eingeht.

Weiterhin sind die Lenkwinkelanalysemittel so ausgestaltet, dass wenigstens anhand der damit ermittelten Kenngröße zwischen
- einer vorliegenden panischen Lenkreaktion des Fahrers und
- einem vom Fahrer bewusst durchgeführten Fahrmanöver
unterschieden wird und
- der Intensitätsgrenzwert davon abhängig ist, ob eine panische Lenkreaktion des Fahrers oder ein vom Fahrer bewusst durchgeführtes Fahrmanöver vorliegt.
Insbesondere bei einem als bewusst durchgeführt erkannten Fahrmanöver soll dem erfahrenen Fahrzeugführer die Möglichkeit gelassen werden, das Gespann durch eigenes fahrerisches Können zu stabilisieren ("Fahrspaß").

Eine vorteilhafte Ausgestaltung der Erfindung ist dadurch gekennzeichnet, dass dann eine vorliegende panische Lenkreaktion des Fahrers erkannt wird, wenn die ermittelte Kenngröße einen Kenngrößenschwellenwert überschreitet.

Eine vorteilhafte Ausgestaltung der Erfindung ist dadurch gekennzeichnet, dass der Kenngrößenschwellenwert von der Fahrzeuglängsgeschwindigkeit abhängig ist.
Dadurch ist es möglich, dass im Bereich niedriger Geschwindigkeiten dem fahrerischen Können ein breiter Raum eingeräumt wird, während bei hohen Geschwindigkeiten eher ein fahrerunabhängiger Stabilisierungseingriff zum Zug kommt.

Eine vorteilhafte Ausgestaltung der Erfindung ist dadurch gekennzeichnet, dass auf vorliegende panische Lenkreaktion des Fahrers nur dann erkannt wird, wenn die Intensität der Schlingerbewegung zusätzlich zeitlich anwächst bzw. eine Schwingung mit wachsender Amplitude vorliegt.

Das Anwachsen der Schlingerintensität ist ein Indiz dafür, dass dem Fahrer die Gespannstabilisierung nicht aus eigener Kraft gelingt.

Eine vorteilhafte Ausgestaltung der Erfindung ist dadurch gekennzeichnet, dass im Falle einer erkannten panischen Lenkreaktion des Fahrers ein kleinerer Intensitätsgrenzwert gewählt wird als im Falle eines als vom Fahrer bewusst durchgeführt erkannten Fahrmanövers. Damit ist sichergestellt, dass bei einem Panikverhalten des Fahrers ein rascher Stabilisierungseingriff erfolgt.

Eine vorteilhafte Ausgestaltung der Erfindung ist dadurch gekennzeichnet, dass ein Tiefpassfilter vorhanden ist, durch welches die Kenngröße vor deren Weiterverarbeitung gefiltert wird. Damit werden hochfrequente Störeinflüsse ausgefiltert.

Eine vorteilhafte Ausgestaltung der Erfindung ist dadurch gekennzeichnet, dass
- eine Lenkwinkelanalyse nur dann stattfindet, wenn wenigstens die Änderung des Lenkwinkels pro Zeiteinheit einen vorgegebenen Grenzwert überschreitet und
- für den Fall, dass keine Lenkwinkelanalyse stattfindet, der Intensitätsgrenzwert auf einen vorgegebenen Standardwert gesetzt wird.
Die Lenkwinkelanalyse verbraucht Rechenzeit im Steuergerät (beispielsweise im Steuergerät des Fahrdynamikreglers). Deshalb ist es vorteilhaft, die Lenkwinkelanalyse nur dann durchzuführen, wenn Indizien für eine wesentliche Lenkreaktion des Fahrers vorliegen.

Eine vorteilhafte Ausgestaltung der Erfindung ist dadurch gekennzeichnet, dass eine Lenkwinkelanalyse nur dann stattfindet, wenn zusätzlich die Intensität der Schlingerbewegung einen vorgebbaren Grenzwert überschreitet. Auch dadurch werden unnötige Lenkwinkelanalysen vermieden.

Eine vorteilhafte Ausgestaltung der Erfindung ist dadurch gekennzeichnet, dass die Intensität der Schlingerbewegung anhand der Differenz zwischen der tiefpassgefilterten Ist-Giergeschwindigkeit des Straßenfahrzeugs und der Soll-Giergeschwindigkeit ermittelt wird.

Eine vorteilhafte Ausgestaltung der Erfindung ist dadurch gekennzeichnet, dass die Soll-Giergeschwindigkeit anhand eines Einspurmodells ermittelt wird. Dieses ist mathematisch einfach und daher auch programmtechnisch einfach umzusetzen.

Die Erfindung umfasst ein Verfahren zur Dämpfung der Schlingerbewegungen eines von einem Straßenfahrzeug gezogenen Anhängers, bei dem
- eine Schlingerbewegung des Anhängers sowie deren Intensität anhand einer Größe, in welche wenigstens eine die Fahrzeugquerdynamik beschreibende Größe eingeht, erkannt wird und
- bei Überschreiten eines Intensitätsgrenzwertes durch die Intensität der Schlingerbewegung die Dämpfung der Schlingerbewegung anhand fahrerunabhängiger Bremsseingriffe am Straßenfahrzeug und/oder einer fahrerunabhängigen Rücknahme des Motormoments erfolgt,
enthält, dadurch gekennzeichnet, dass
- aus dem zeitlichen Verlauf des Lenkwinkels wenigstens eine Kenngröße ermittelt wird und
- der Intensitätsgrenzwert, bei dessen Überschreiten durch die Intensität der Schlingerbewegung die Dämpfung der Schlingerbewegung erfolgt, abhängig von der ermittelten Kenngröße ist.

Dabei wird wenigstens anhand der damit ermittelten Kenngröße zwischen
- einer vorliegenden panischen Lenkreaktion des Fahrers und
- einem vom Fahrer bewusst durchgeführten Fahrmanöver
unterschieden und
- der Intensitätsgrenzwert ist davon abhängig, ob eine panische Lenkreaktion des Fahrers oder ein vom Fahrer bewusst durchgeführtes Fahrmanöver vorliegt.

Die vorteilhaften Ausgestaltungen der erfindungsgemäßen Vorrichtung äußern sich selbstverständlich auch als vorteilhafte Ausgestaltungen des erfindungsgemäßen Verfahrens und umgekehrt.

### Zeichnung

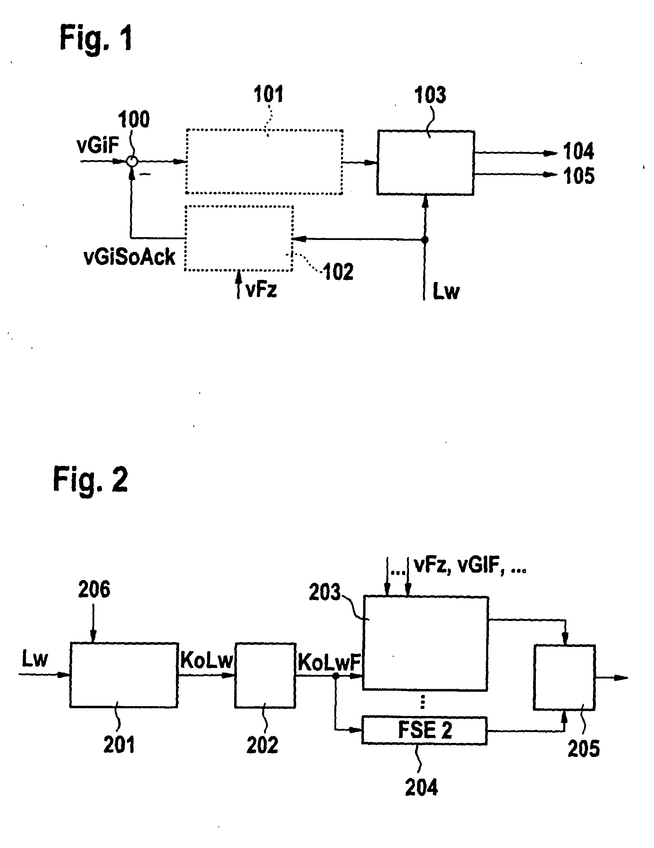

Die Zeichnung besteht aus den Figuren 1 und 2.

In Fig. 1 ist der Aufbau des Gesamtsystems dargestellt.

In Fig. 2 ist die Analyse des Lenkwinkels dargestellt.

### Ausführungsbeispiel

Bei einem Fahrzeuggespann können, z.B. bedingt durch Seitenwind, Schlingerbewegungen auftreten, bei denen der Anhänger um seine Hochachse schwingt und über die Anhängerkupplung auch das Zugfahrzeug zu Schwingungen anregt. Ist die Fahrzeuggeschwindigkeit vFz
- unterhalb der sogenannten kritischen Geschwindigkeit vFzkrit (vFz < vFzkrit), dann sind die Schwingungen gedämpft,
- bei vFz = vFzkrit ungedämpft und
- oberhalb der kritischen Geschwindigkeit (vFz > vFzkrit) klingen die Schwingungen auf, d.h. deren Amplitude bzw. Intensität wächst an.
Der Wert der kritischen Geschwindigkeit vFzkrit hängt u.a. von Geometriedaten wie Radstand und Deichsellänge, von Masse und Gierträgheitsmoment des Fahrzeugs und des Anhängers und von der Schräglaufsteifigkeiten der Achsen ab. Er liegt bei Pkw-Gespannen typischerweise im Bereich von 90 - 130 km/h. Zur Erkennung der Schlingerbewegung des Fahrzeuggespanns wird die Differenz zwischen der aufbereiteten (insbesondere tiefpassgefilterten) Giergeschwindigkeit vGiF und der aus der Fahrervorgabe (Lenkwinkel, Fahrzeuglängsgeschwindigkeit) gebildeten Soll-Giergeschwindigkeit vGiSoAck herangezogen. Zusätzlich wird der Lenkwinkel bei der Freigabe von Stabilisierungseingriffen berücksichtigt, um bei gezielten Lenkbewegungen des Fahrers nicht zu sensibel einzugreifen. Deshalb werden die Lenkbewegungen des Fahrers analysiert, um bei panischen Lenkreaktionen frühzeitig die Gespannstabilisierung freizugeben und so zu einer erhöhten Sicherheit beizutragen. Der Fahrerwunsch wird aufgrund der Lenkbewegungen des Fahrers und daraus abgeleiteter Größen analysiert und beurteilt. Abhängig davon werden die Stabilisierungseingriffe freigegeben. Damit ist es möglich, einerseits panisches Verhalten des Fahrers rechtzeitig zu erkennen und notwendige Stabilisierungseingriffe situationsgerecht freizugeben, andererseits die Auslösung von schwingungsdämpfenden Eingriffen an spezielle Fahrmanöver möglichst gut anzupassen. Damit trägt das Verfahren zu erhöhter Sicherheit und vergrößertem Komfort beim Fahren mit Anhänger bei.

Die Analyse der Lenkwinkelbewegungen wird anhand von Fig. 2 erläutert.

In Block 201 werden die Lenkbewegungen des Fahrers hinsichtlich
- des Lenkwinkels Lw,
- der Lenkwinkeländerung (pro Zeiteinheit) sowie
- der Dauer der Lenkbewegungen
analysiert.
Daraus wird eine Kenngröße KoLw gebildet. Diese Kenngröße wird in Block 202 mit einem Tiefpass gefiltert und daraus die gefilterte Kenngröße KoLwF gewonnen.

Anhand der gefilterten Größe KoLwF sowie optional weiterer Parameter findet in den Blöcken 203 und 204 die Erkennung verschiedener Fahrsituationen statt. In Fig. 2 sind dabei beispielhaft lediglich zwei Blöcke (203 und 204) eingezeichnet, es kann sich dabei selbstverständlich aber auch um nur einen Block oder mehr als zwei Blöcke handeln, wie es durch die Punkte ("...") in vertikaler Richtung zwischen den Blöcken 203 und 204 angedeutet ist.

In Block 203 wird anhand der Größe KoLwF eine panische Lenkbewegung bzw. Lenkreaktion des Fahrers erkannt. In diesem Fall ist eine Dämpfung der Anhängerschwingung durch fahrerunabhängige Bremseingriffe unerlässlich. Eine panische Lenkreaktion des Fahrers wird dadurch erkannt, dass die Größe KoLwF einen (optional von der Fahrzeuglängsgeschwindigkeit abhängigen) Schwellenwert überschreitet. Neben dieser Schwellenwertüberschreitung können weitere Bedingungen wie z.B. eine Giergeschwindigkeitsschwelle oder wachsende Amplituden der Anhängerschwingung herangezogen werden.

Aus der beschriebenen Analyse des Lenkwinkelverlaufs können neben der Panikerkennung weitere Fahrsituationen wie z.B. das Überholen eines anderen Verkehrsteilnehmers mit leicht schlingerndem Anhänger detektiert und aufgrund dieser Information die Auslöseschwelle der Schlingerlogik und damit die Eingriffsfreigabe angepasst werden, um unnötige Eingriffe zu verhindern.

In Block 204 wird das Vorliegen eines Überholmanövers erkannt. Beispielsweise schert das Fahrzeug auf einer mehrspurigen Fahrbahn nach links aus und später nach rechts wieder ein. In diesem Fall sind fahrerunabhängige Bremseingriffe unerwünscht (solange die Intensität der Anhängerschwingung natürlich einen vorgebbaren Schwellenwert nicht überschreitet).

In einem weiteren (nicht dargestellten) Block kann beispielsweise erkannt werden, dass der Fahrer durch gekonnte Lenkmanöver dem Anhängerschwingen bereits selbsttätig und fachmännisch entgegensteuert. In diesem Fall wird auf fahrerunabhängige Bremseingriffe ebenfalls verzichtet.

Die Ausgangssignale der Blöcke 203 und 204 (sowie optional weiterer Blöcke) werden an Block 205 weitergeleitet, in welchem die fahrerunabhängigen Eingriffe in das Bremssystem (radindividuelle Bremseingriffe) und/oder die Motorsteuerung (Rücknahme des Motormoments) durchgeführt werden.

Den Blöcken 203 und 204 werden zur Erkennung der jeweiligen Situation neben der Größe KoLwF selbstverständlich weitere Größen (beispielsweise die Fahrzeuglängsgeschwindigkeit vFz oder die tiefpass-gefilterte Giergeschwindigkeit vGiF) zur Verfügung gestellt.

Die Analyse der Lenkwinkelverlaufs in Block 201 findet nur dann statt , wenn über Eingang 206 von Block 201 eine Freigabe der Analyse erfolgt. Dazu kann beispielsweise der Lenkwinkelgradient betrachtet werden. Um ein zu schnelles Ende der Panikerkennung bei sich beruhigendem Lenkwinkelverlauf zu vermeiden, wird ein von der Auslöseschwelle verschiedener Grenzwert (und gegebenenfalls weitere Bedingungen wie eine zweite Giergeschwindigkeitsschwelle) für den Abbruch der Lenkwinkelanalyse und das zurücksetzen der Panikerkennung genutzt.

Die Einbettung der in Fig. 2 dargestellten Vorrichtung in ein größeres System ist in Fig. 1 dargestellt. Dabei handelt es sich bei Block 103 um das in Fig. 2 dargestellte System.

In Block 100 wird in Fig. 1 die Differenz zwischen der Ist-Gierrate vGiF und der Soll-Gierrate vGiSoAck gebildet. Die Soll-Gierrate wird vGiSoAck wird dabei in Block 102 aus den Eingangsgrößen Lw (= Lenkwinkel bzw. Lenkradwinkel) sowie vFz (= Fahrzeuglängsgeschwindigkeit) gebildet. Anhand der zeitlichen Verlaufs der Größe vGiF - vGiSoAck wird in Block 101 ermittelt, ob eine Schlingerbewegung des Anhängers (welche sich auf eine Schlingerbewegung des Fahrzeug überträgt), vorliegt. Dabei wird die Differenzgröße vGiF - vGiSoAck auf zeitlich periodisch oder nahezu periodisch wiederkehrende Strukturen untersucht. Dazu eignet sich die sogenannte Wavelettransformation. Alternativ zu einer Wavelettransformation ist auch die Verwendung einer Fouriertransformation prinzipiell denkbar, deren programmtechnische Umsetzung weist jedoch den Nachteil höheren Speicherplatzbedarfs auf (bei einer Wavelettransformation sind sehr hohe Datenkompressionsraten erreichbar).

Das Ausgangssignal von Block 101 wird an Block 103 weitergeleitet. Dort wird anhand des Lenkwinkels (und optional weiterer zusätzlicher Signale) über die Freigabe fahrerunabhängiger Maßnahmen zur Gespannstabilisierung entschieden. Dabei ist insbesondere an eine Rücknahme des Motormoments (Ausgang 104) oder radindividuelle Bremseingriffe (Ausgang 105) gedacht.

## Patentansprüche

1. Vorrichtung zur Dämpfung der Schlingerbewegungen eines von einem Straßenfahrzeug gezogenen Anhängers,
- welche Schlingerbewegungsdetektionsmittel (101), mit denen eine Schlingerbewegung des Anhängers sowie deren Intensität anhand einer Größe (vGiF - vGiSoAck), in welche wenigstens eine die Fahrzeugquerdynamik beschreibende Größe (vGiF) eingeht, erkannt wird und
- Schlingerdämpfungsmittel, mit denen bei Überschreiten eines Intensitätsgrenzwertes durch die Intensität der Schlingerbewegung die Dämpfung der Schlingerbewegung anhand fahrerunabhängiger Bremseingriffe (105) am Straßenfahrzeug und/oder einer fahrerunabhängigen Rücknahme des Motormoments (104) erfolgt,
enthält, wobei weiterhin
- Lenkwinkelanalysemittel (201) vorhanden sind, mit denen aus dem zeitlichen Verlauf des Lenkwinkels (Lw) wenigstens eine Kenngröße (KoLw) ermittelt wird und
- der Intensitätsgrenzwert, bei dessen Überschreiten durch die Intensität der Schlingerbewegung die Dämpfung der Schlingerbewegung erfolgt, abhängig von der ermittelten Kenngröße (KoLw) ist,
**dadurch gekennzeichnet, dass** die Lenkwinkelanalysemittel (201) so ausgestaltet sind, dass wenigstens anhand der damit ermittelten Kenngröße (KoLw) zwischen
- einer vorliegenden panischen Lenkreaktion des Fahrers und
- einem vom Fahrer bewusst durchgeführten Fahrmanöver unterschieden wird und
- der Intensitätsgrenzwert davon abhängig ist, ob eine panische Lenkreaktion des Fahrers oder ein vom Fahrer bewusst durchgeführtes Fahrmanöver vorliegt.

2. Vorrichtung nach Anspruch 1, **dadurch gekennzeichnet,**
- **dass** dann eine vorliegende panische Lenkreaktion des Fahrers erkannt wird, wenn die ermittelte Kenngröße (KoLw) einen Kenngrößenschwellenwert überschreitet.

3. Vorrichtung nach Anspruch 2, **dadurch gekennzeichnet, dass** der Kenngrößenschwellenwert von der Fahrzeuglängsgeschwindigkeit (vFz) abhängig ist.

4. Vorrichtung nach Anspruch 1, **dadurch gekennzeichnet, dass** eine panische Lenkreaktion des Fahrers nur dann erkannt wird, wenn die Intensität der Schlingerbewegung zusätzlich zeitlich anwächst.

5. Vorrichtung nach Anspruch 1, **dadurch gekennzeichnet, dass** im Falle einer erkannten panischen Lenkreaktion des Fahrers ein kleinerer Intensitätsgrenzwert gewählt wird als im Falle eines vom Fahrer bewusst durchgeführt erkannten Fahrmanövers.

6. Vorrichtung nach Anspruch 1, **dadurch gekennzeichnet,**
- **dass** ein Tiefpassfilter vorhanden ist, durch welches die Kenngröße (KoLw) vor deren Weiterverarbeitung gefiltert wird.

7. Vorrichtung nach Anspruch 1, **dadurch gekennzeichnet, dass**
- eine Lenkwinkelanalyse nur dann stattfindet, wenn wenigstens die Änderung des Lenkwinkels pro Zeiteinheit einen vorgegebenen Grenzwert überschreitet und
- für den Fall, dass keine Lenkwinkelanalyse stattfindet, der Intensitätsgrenzwert auf einen vorgegebenen Standardwert gesetzt wird.

8. Vorrichtung nach Anspruch 7, **dadurch gekennzeichnet, dass**
- eine Lenkwinkelanalyse nur dann stattfindet, wenn zusätzlich die Intensität der Schlingerbewegung einen vorgebbaren Grenzwert überschreitet.

9. Vorrichtung nach Anspruch 1, **dadurch gekennzeichnet, dass** die Intensität der Schlingerbewegung anhand der Differenz zwischen der tiefpassgefilterten Ist-Giergeschwindigkeit des Straßenfahrzeugs (vGiF) und der Soll-Giergeschwindigkeit (vGoSoAck) ermittelt wird.

10. Vorrichtung nach Anspruch 7, **dadurch gekennzeichnet, dass** die Soll-Giergeschwindigkeit (vGiSoAck) anhand eines Einspurmodells ermittelt wird.

11. Verfahren zur Dämpfung der Schlingerbewegungen eines von einem Straßenfahrzeug gezogenen Anhängers, bei dem
- eine Schlingerbewegung des Anhängers sowie deren Intensität anhand einer Größe (vGiF - vGiSoAck), in welche wenigstens eine die Fahrzeugquerdynamik beschreibende Größe (vGiF - vGiSoAck) eingeht, erkannt wird und
- bei Überschreiten eines Intensitätsgrenzwertes durch die Intensität der Schlingerbewegung die Dämpfung der Schlingerbewegung anhand fahrerunabhängiger Bremsseingriffe (105) am Straßenfahrzeug und/oder einer fahrerunabhängigen Rücknahme des Motormoments (104) erfolgt,
- aus dem zeitlichen Verlauf des Lenkwinkels (Lw) wenigstens eine Kenngröße (KoLw) ermittelt wird und
- der Intensitätsgrenzwert, bei dessen Überschreiten durch die Intensität der Schlingerbewegung die Dämpfung der Schlingerbewegung erfolgt, abhängig von der ermittelten Kenngröße (KoLw) ist,
**dadurch gekennzeichnet, dass** wenigstens anhand der ermittelten Kenngröße (KoLw) zwischen
- einer vorliegenden panischen Lenkreaktion des Fahrers und
- einem vom Fahrer bewusst durchgeführten Fahrmanöver unterschieden wird und
- der Intensitätsgrenzwert davon abhängig ist, ob eine panische Lenkreaktion des Fahrers oder ein vom Fahrer bewusst durchgeführtes Fahrmanöver vorliegt.

## Claims

1. Device for damping rolling movements of a trailer being pulled by a road vehicle, comprising
- rolling movement detecting means (101) with which a rolling movement of the trailer and its intensity are detected on the basis of a variable (vGiF - vGiSoAck), which includes at least one variable (vGiF) which describes the vehicle transverse dynamics, and
- roll damping means, by means of which, when an intensity limiting value is exceeded by the intensity of the rolling movement, the rolling movement is damped on the basis of driver-independent braking interventions (105) on the road vehicle and/or driver-independent reduction of the engine torque (104),
where, in addition,
- steering angle analysis means (201) are provided, by means of which at least one characteristic variable (KoLw) is determined from the time-based profile of the steering angle (Lw), and
- the intensity limiting value is dependent on the determined characteristic variable (KoLw), the rolling movement being damped when said intensity limiting value is exceeded by the intensity of the rolling movement
**characterized in that** the steering angle analysis means (201) are designed in such a way that a distinction is made, at least on the basis of the characteristic variable (KoLw), between
- a panic steering reaction of the driver occurring and
- a driving manoeuvre carried out by the driver deliberately,
and
- the intensity limiting value is dependent on whether a panic steering reaction of the driver or a driving manoeuvre carried out deliberately by the driver occurs.

2. Device according to Claim 1, **characterized**
- **in that** a panic steering reaction of the driver is detected as being present when the determined characteristic variable (KoLw) exceeds a characteristic variable threshold value.

3. Device according to Claim 2, **characterized in that** the characteristic variable threshold value is dependent on the vehicle longitudinal speed (vFz).

4. Device according to Claim 1, **characterized**
**in that** a panic steering reaction of the driver is detected only if the intensity of the rolling movement is also increasing with time.

5. Device according to Claim 1, **characterized in that** if a panic steering reaction of the driver is detected, a smaller intensity limiting value is selected than if a driving manoeuvre carried out deliberately by the driver is detected.

6. Device according to Claim 1, **characterized**
- **in that** a low-pass filter is present, by means of which the characteristic variable (KoLw) is filtered before it is processed further.

7. Device according to Claim 1, **characterized in that**
- the steering angle is analyzed only if at least the change in steering angle per unit time exceeds a predefined limiting value, and
- if the steering angle is not analyzed, the intensity limiting value is set to a predefined standard value.

8. Device according to Claim 7, **characterized in that**
- the steering angle is analyzed only if, in addition, the intensity of the rolling movement exceeds a predefineable limiting value.

9. Device according to Claim 1, **characterized in that** the intensity of the rolling movement is determined on the basis of the difference between the low-pass-filtered actual yaw rate of the road vehicle (vGiF) and the nominal yaw rate (vGoSoAck).

10. Device according to Claim 7, **characterized in that** the nominal yaw rate (vGiSoAck) is determined on the basis of a single-track model.

11. Method for damping rolling movements of a trailer being pulled by a road vehicle, in which
- a rolling movement of the trailer and its intensity are detected on the basis of a variable (vGiF - vGiSoAck), which includes at least one variable (vGiF) which describes the vehicle transverse dynamics, and
- when an intensity limiting value is exceeded by the intensity of the rolling movement, the rolling movement is damped on the basis of driver-independent braking interventions (105) on the road vehicle and/or driver-independent reduction of the engine torque (104),
- at least one characteristic variable (KoLw) is determined from the time-based profile of the steering angle (Lw), and
- the intensity limiting value is dependent on the determined characteristic variable (KoLw), the rolling movement being damped when said intensity limiting value is exceeded by the intensity of the rolling movement,
**characterized in that** a distinction is made, at least on the basis of the characteristic variable (KoLw), between
- a panic steering reaction of the driver occurring and
- a driving manoeuvre carried out by the driver deliberately,
and
- the intensity limiting value is dependent on whether a panic steering reaction of the driver or a driving manoeuvre carried out deliberately by the driver occurs.

## Revendications

1. Dispositif pour l'amortissement des mouvements de roulis d'une remorque tirée par un véhicule automobile, comprenant :
- des moyens de détection de mouvement de roulis (101) saisissant un mouvement de roulis de la remorque ainsi que son intensité à l'aide d'une grandeur (vGIF - vGiSoAck) dans laquelle au moins une grandeur décrivant la dynamique transversale du véhicule (vGIF) intervient, et
- des moyens d'amortissement du roulis effectuant un amortissement du mouvement de roulis lorsque l'intensité du mouvement de roulis dépasse une valeur limite d'intensité, à l'aide d'interventions de freinage (105) indépendantes du conducteur sur le véhicule automobile et/ou d'une reprise indépendante du conducteur du couple du moteur (104),
- des moyens d'analyse d'angle de direction (201) présents par ailleurs déterminant au moins une grandeur caractéristique (KoLw) à partir de l'allure dans le temps de l'angle de direction (Lw),
- la valeur limite d'intensité qui provoque lorsqu'elle est dépassée par l'intensité du mouvement de roulis, l'amortissement du mouvement de roulis, étant fonction de la grandeur caractéristique (KoLw) déterminée,
**caractérisé en ce que**
les moyens d'analyse d'angle de direction (201) sont configurés pour établir au moins à l'aide de la grandeur caractéristique (KoLw) ainsi déterminée une différence entre:
- une réaction de direction de panique du conducteur, et
- une manoeuvre de conduite consciente du conducteur, et
ou la valeur limite d'intensité dépend du fait qu'on a une réaction de direction de panique du conducteur ou une manoeuvre de conduite consciente du conducteur.

2. Dispositif selon la revendication 1,
**caractérisé en ce qu'**
une réaction de direction de panique du conducteur est détectée lorsque la grandeur caractéristique (KoLw) déterminée dépasse une valeur seuil de grandeur caractéristique.

3. Dispositif selon la revendication 2,
**caractérisé en ce que**
la valeur seuil de grandeur caractéristique dépend de la vitesse longitudinale du véhicule (vFz).

4. Dispositif selon la revendication 1,
**caractérisé en ce qu'**
une réaction de direction de panique du conducteur n'est détectée que lorsque l'intensité du mouvement de roulis augmente en outre dans le temps.

5. Dispositif selon la revendication 1,
**caractérisé en ce que**
dans le cas d'une réaction de direction de panique détectée du conducteur, on choisit une valeur limite d'intensité inférieure à celle dans le cas d'une manoeuvre de conduite détectée comme consciente du conducteur.

6. Dispositif selon la revendication 1,
**caractérisé par**
un filtre passe-bas filtrant la grandeur caractéristique (KoLw) avant son traitement ultérieur.

7. Dispositif selon la revendication 1,
**caractérisé en ce que**
- une analyse d'angle de direction n'a lieu que lorsqu'au moins la modification de l'angle de direction par unité de temps dépasse une valeur limite prédéfinie, et
- au cas où aucune analyse d'angle de direction n'a lieu, la valeur limite d'intensité est réglée à une valeur standard prédéfinie.

8. Dispositif selon la revendication 7,
**caractérisé en ce qu'**
une analyse d'angle de direction n'a lieu que lorsque l'intensité du mouvement de roulis dépasse en outre une valeur limite pouvant être prédéfinie.

9. Dispositif selon la revendication 1,
**caractérisé en ce que**
l'intensité du mouvement de roulis est déterminée à l'aide de la différence entre la vitesse d'embardée réelle filtrée par le filtre passe-bas du véhicule automobile (vGiF) et la vitesse d'embardée de consigne (vGiSoAck).

10. Dispositif selon la revendication 7,
**caractérisé en ce que**
la vitesse d'embardée de consigne (vGiSoAck) est déterminée à l'aide d'un modèle à voie unique.

11. Procédé pour amortir des mouvements de roulis d'une remorque tirée par un véhicule automobile, selon lequel
- on détecte un mouvement de roulis de la remorque ainsi que son intensité à l'aide d'une grandeur (vGIF - vGiSoAck) dans laquelle au moins une grandeur décrivant la dynamique transversale du véhicule (vGIF - vGiSoAck) intervient, et
- on réalise l'amortissement du mouvement de roulis lorsque l'intensité du mouvement de roulis dépasse une valeur limite d'intensité, à l'aide d'interventions de freinage (105) indépendantes du conducteur sur le véhicule automobile et/ou d'une reprise indépendante du conducteur du couple du moteur (104),
- on détermine au moins une grandeur caractéristique (KoLw) à partir de l'allure dans le temps de l'angle de direction (Lw) et
- la valeur limite d'intensité dépassée par l'intensité du mouvement de roulis qui crée, l'amortissement du mouvement de roulis, dépend de la grandeur caractéristique (KoLw) déterminée,
**caractérisé en ce qu'**
on établit au moins à l'aide de la grandeur caractéristique (KoLw) déterminée une différence entre :
- une réaction de direction de panique du conducteur et
- une manoeuvre de conduite consciente du conducteur, et
la valeur limite d'intensité dépend du fait qu'on a une réaction de direction de panique du conducteur ou une manoeuvre de conduite consciente du conducteur se produit.
